# FASCICULE DE BREVET EUROPEEN

(11) **EP 2 095 498 B1**
(45) Date de publication et mention de la délivrance du brevet: **09.04.2014**
(21) Numéro de dépôt: 07858737.5
(22) Date de dépôt: 26.11.2007
(51) Int. Cl.: H02P 9/08, H02J 7/14, F02N 11/04

(54) **SYSTEME D'ALIMENTATION EN ENERGIE ELECTRIQUE DE VEHICULE AVEC UN DISPOSITIF DE PRE-CHARGE DE MOYENS DE STOCKAGE D'ENERGIE**
STROMVERSORGUNGSSYSTEM FÜR KRAFTFAHRZEUG MIT EINER ENERGIESPEICHERMITTEL-VORLADEEINRICHTUNG
VEHICLE POWER SUPPLY SYSTEM WITH ENERGY STORAGE MEANS PRECHARGE DEVICE

(30) Priorité: 15.12.2006 FR 0655560
(43) Date de publication de la demande: 02.09.2009
(73) Titulaire: Valeo Equipements Electriques Moteur, 94046 Créteil Cedex (FR)
(72) Inventeur: CHEMIN, Michaël, 51700 Festigny (FR); MASSON, Philippe, 77166 Grisy-suisnes (FR)
(86) Numéro de dépôt international: PCT/FR2007/052397
(87) Numéro de publication internationale: WO 2008/074951

(56) Documents cités:
- EP-A- 1 130 737
- FR-A1- 2 838 572
- US-A1- 2003 042 873
- US-B1- 6 420 793

## Description

L'invention concerne un système avec une pré-charge de moyens de stockage d'énergie, notamment du type dit super-condensateur, associés à une machine électrique tournante.

Elle s'applique plus particulièrement à l'industrie automobile, et plus particulièrement aux circuits de charge en énergie électrique des véhicules automobiles muni d'un moteur thermique, la machine tournante électrique précitée étant alors constituée par un alternateur, et plus particulièrement encore par un alternateur-démarreur.

On sait en effet qu'un alternateur peut fonctionner de façon réversible, c'est-à-dire soit en tant que générateur d'électricité, soit en tant que moteur.

En mode générateur, l'alternateur est entraîné en rotation par le moteur thermique du véhicule et fournit de l'énergie électrique (courant alternatif). Il sert notamment à (re)charger des moyens de stockage d'énergie électrique, que l'on qualifiera de "principaux", les circuits électriques associés à un véhicule comprenant généralement plusieurs moyens de stockage d'énergie électrique comme il le sera montré ci-après. Les moyens de stockage d'énergie électrique principaux sont constitués dans la pratique par une batterie ou accumulateur rechargeable. L'alimentation de cette batterie doit être réalisée à l'aide d'une tension continue. L'alternateur fournissant une tension sinusoïdale, ou pour le moins alternative, il est nécessaire de prévoir un dispositif de redressement, habituellement un convertisseur alternatif-continu, la tension générée par l'alternateur étant généralement beaucoup plus élevée que celle nécessaire à la charge de la batterie.

Dans les systèmes modernes, on prévoit en outre des deuxièmes moyens de stockage d'énergie électrique, que l'on peut qualifier "d'auxiliaires", constitués le plus souvent par un composant électrique du type dit "super-condensateur". II s'agit d'un condensateur dont la structure particulière permet d'atteindre des valeurs de capacités très élevées, par exemple de l'ordre de la centaine de Farads, voire supérieures, ce qui les rend aptes à emmagasiner une énergie électrique également élevée. Ce super-condensateur est alimenté en énergie électrique par la sortie du convertisseur alternatif-continu précité, sous une tension élevée et non régulée, car dépendant notamment de la vitesse de rotation de l'alternateur entraîné par le moteur thermique du véhicule.

Dans cette configuration, on intercale entre le super-condensateur et la batterie un convertisseur continu-continu, fournissant à la batterie une tension régulée destinée à maintenir sa charge ou à la recharger en tant que de besoin. Pour fixer les idées, les batteries couramment utilisées fournissent une tension de + 12 V. Dans ces conditions, le convertisseur continu-continu fournit habituellement sur sa sortie une tension régulée de +14 V.

Comme il est bien connu, un alternateur comprend un rotor et un stator, chacun associé à un ou plusieurs enroulements, le rotor pouvant en outre comprendre un aimant permanent. L'enroulement du stator est alimenté par un courant dit d'excitation. Les alternateurs mis en oeuvre sur les véhicules modernes sont du type triphasé, de façon plus générale polyphasé (par exemple hexaphasé). Dans cette hypothèse, le stator comprend donc trois enroulements (ou plus).

Si l'alternateur est entraîné en rotation par le moteur thermique et l'enroulement du rotor alimenté par un courant d'excitation approprié, l'alternateur fonctionne en générateur de courant électrique.

Par contre, si les enroulements du stator sont alimentés par des courants alternatifs, déphasés de façon appropriée, l'alternateur peut fonctionner en mode moteur, et cette caractéristique avantageuse peut être mise à profit pour l'utiliser comme démarreur du moteur thermique du véhicule.

Pour alimenter les enroulements de stator en "mode moteur", il est connu de recourir à un convertisseur alternatif-continu de type réversible. Dans le "mode moteur", le convertisseur alternatif-continu fournit aux enroulements du stator l'énergie électrique qui leur est nécessaire. Dans ce mode, le convertisseur alternatif-continu est lui-même alimenté en énergie électrique (tension continue) par les moyens de stockage d'énergie électrique auxiliaires, par exemple un super-condensateur.

Le super-condensateur doit être également pré-chargé, car il ne peut conserver indéfiniment sa charge lorsque le moteur thermique est à l'arrêt. Pour ce faire, on recourt habituellement, dans l'Art Connu, à un convertisseur continu-continu également de type réversible. C'est donc la batterie, moyens de stockage d'énergie électrique principaux, qui sert de source d'énergie pour pré-charger ce super-condensateur.

Ainsi, par FR2838572, il est connu un système de charge d'un dispositif de stockage d'énergie électrique à partir d'une source d'énergie électrique, par l'intermédiaire d'un convertisseur DC-DC. Le système est du type comprenant une résistance électrique dans le circuit de charge en série avec la source d'énergie électrique et le convertisseur DC-DC. Le système comprend, entre la source d'énergie électrique et le convertisseur de tension DC-DC, un dispositif fonctionnant en convertisseur réducteur de tension qui produit une tension pouvant varier jusqu'à la tension de la source d'énergie électrique à l'entrée du convertisseur DC-DC. Ce système est utilisable pour charger un supercondensateur à partir de la batterie d'un véhicule automobile.

De plus, par US 6,420,793, il est connu un procédé pour démarrer le moteur thermique d'un véhicule au moyen d'un alterno-démarreur. Le véhicule comprend un premier dispositif de stockage d'énergie et un second dispositif de stockage d'énergie. Le procédé comprend des étapes consistant à surveiller un niveau de charge du second dispositif de stockage d'énergie, et à activer un circuit de commutation de convertisseur pour charger le dispositif de stockage d'énergie secondaire à partir du premier dispositif de stockage d'énergie jusqu'à ce que le niveau de charge devienne supérieur à un niveau de charge maximum. Par la suite, un circuit de commutation d'onduleur est activé pour alimenter l'alterno-démarreur avec l'énergie disponible dans les premier et second dispositifs de stockage d'énergie. L'alterno-démarreur est activé en démarreur jusqu'à ce que le moteur thermique démarre ou que le niveau de charge du second dispositif de stockage d'énergie tombe en dessous d'un niveau de charge minimum.

L'architecture décrite plus haut est généralement connue sous l'appellation de "*système 14+X à super-condensateur de structure série*", le nombre "14" représentant l'amplitude de la tension de sortie régulée du convertisseur continu-continu lorsqu'il alimente la batterie (mode que l'on qualifiera de "normal") et "14+X" l'amplitude de la tension aux bornes du super-condensateur, X étant une valeur variable puisque la tension en sortie du convertisseur alternatif-continu n'est pas régulée, comme il a été rappelé. Typiquement cette tension est de l'ordre de la cinquantaine de volts, voire plus.

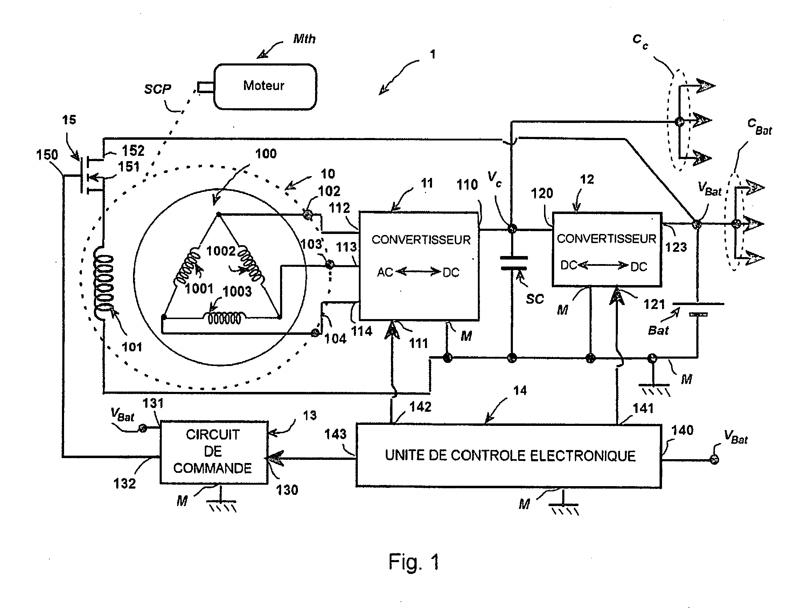

Pour fixer les idées, on va maintenant décrire brièvement un exemple de cette architecture mettant en oeuvre un alternateur-démarreur, selon l'Art Connu par référence à la figure 1.

Cette figure 1 illustre très schématiquement un système complet d'alimentation en énergie électrique des circuits d'un véhicule automobile, sous la référence 1, le véhicule comprenant notamment un moteur thermique *Mth.*

Il comprend en cascade (structure série) un alternateur-démarreur 10, un convertisseur alternatif-continu 11, un super-condensateur *SC*, un convertisseur continu-continu 12 et une batterie *Bat.*

On a également représenté deux modules de circuits électroniques : une unité de contrôle électronique 14, constituée par exemple par un calculateur numérique embarqué à programmes enregistrés, et un circuit 13 de commande de l'excitation de l'enroulement de rotor 101.

Tous les modules, 11 à 14, le super-condensateur *SC* et la batterie *Bat* sont reliés à un circuit de masse *M*, normalement en continuité électrique avec le châssis du véhicule (non représenté).

La tension aux bornes du super-condensateur *SC* est égale à *V_{c}*, par exemple (14 + X) volts, avec X variable, et la tension aux bornes de la batterie *Bat* égale à *V_{Bat}*, habituellement + 12 V. On constate que l'on dispose de deux réseaux d'alimentation électrique, l'un *C_{c}* à la tension *V_{c}*, l'autre *C_{Bat}* à la tension de batterie *V_{Bat}*. Le premier circuit, *C_{c}*, alimente divers organes du véhicules qui n'ont pas besoin d'une tension régulée, tension dite "flottante", l'autre réseau d'alimentation électrique, *C_{Bat}*, alimente d'autres organes qui nécessitent une tension régulée et permanente : circuits d'éclairage par exemple.

De façon plus précise, l'alternateur-démarreur 10 de la figure 1 est supposé être du type triphasé et son stator 100 comprend donc trois enroulements, 1001 à 1003, connectés en configuration triangle dans l'exemple de la figure 1. Les trois sorties du stator (sommets du triangle), 102 à 104, sont connectés à trois entrées, 112 à 114, du convertisseur alternatif-continu 11. Ce dernier fournit la tension continue *V_{c}* de charge du super-condensateur *SC*, entre une borne de sortie 110 et la masse *M*. Cette tension alimente le convertisseur continu-continu 12 entre une borne d'entrée 120 et la masse *M*. Enfin, le convertisseur continu-continu 12 charge la batterie *Bat*, disposée entre une borne de sortie 123 et la masse *M*.

L"unité de contrôle électronique 14 est alimentée par la tension de batterie *V_{Bat}* (borne d'alimentation 140).

Les circuits composant le convertisseur alternatif-continu 11 et le convertisseur continu-continu 12 sont susceptibles de nombreuses déclinaisons et sont bien connus, en soi, de l'Homme de Métier. Le convertisseur continu-continu 12 est commandé de façon classique par l'unité de contrôle électronique 14 : signaux de commande sur la sortie 141 transmis à une entrée de commande 121. De façon avantageuse, le convertisseur alternatif-continu 11 peut être réalisé à base de transistors MOSFET intégrant des diodes. Pour fixer les idées, un tel convertisseur et son fonctionnement sont décrits notamment dans la demande de brevet FR 2 745 445 (VALEO ELECTRONIQUE). Toujours pour fixer les idées, un exemple de convertisseur continu-continu est décrit dans la demande de brevet français FR 2 833 113 (VALEO EQUIPEMENTS ELECTRIQUES MOTEUR).

En mode "normal", dit générateur de courant, l'alternateur-démarreur 10 est entraîné par le moteur thermique *Mth*, à l'aide d'un système courroie-poulie *SCP* ou similaire symbolisé par des traits pointillés sur la figure 1. II fonctionne alors en mode générateur de courant, et fournit les tensions triphasées précitées, tensions redressées par le convertisseur alternatif-continu 11 qui charge le super-condensateur *SC* à la tension *V_{c}*. L'enroulement de rotor 101 est alimenté par un courant d'excitation via un commutateur 25, avantageusement un transistor NMOS 15 dont le drain 152 est connecté à la tension *V_{Bat}* et la source 151 connectée à l'une des extrémité de l' enroulement de rotor 101, l'autre extrémité de cet enroulement étant à la masse *M*. La grille 150 est commandée par des signaux délivrés par la sortie 132 du circuit de commande 13 dont l'entrée 130 est connecté à une des sorties 143 de l'unité de commande électronique 14, générant des signaux de commande spécifiques élaborés par cette unité. Le circuit de commande 13 est alimenté par la tension de batterie *V_{Bat}* sur une borne d'alimentation 131.

Classiquement, les signaux de commande délivrés à la grille 150 sont des signaux impulsionnels du type à modulation de durée ou "PWM" selon la dénomination anglo-saxonne couramment utilisée (pour "Pulse Width Modulation").

La figure 1A illustre de façon très schématique le fonctionnement du circuit de commande 13. Celui-ci comprend deux modules principaux : un comparateur 133 et un générateur de signaux "PWM" 134. Un doubleur de tension, ou une pompe de charge haute fréquence, non représenté pour ne pas alourdir inutilement la figure, est généralement requise entre le générateur PWM et le transistor NMOS afin d'appliquer à la grille de celui-ci une tension supérieure à *V_{Bat}* lorsque celui-ci doit être rendu passant. Le comparateur 133 reçoit sur une première entrée, 130, des signaux de consigne ou tension de référence *V_{Ref}* délivrés par l'unité de contrôle électronique 14 et sur une deuxième entrée, 131, la tension de batterie *V_{Bat}.* Lorsque la tension de batterie *V_{Bat}* descend en dessous de la valeur de référence *V_{Ref},* un signal de commande est délivré par la sortie 1330 du comparateur 133 à l'entrée 1340 du générateur de signaux "PWM" 134, qui à son tour délivre des signaux de commande modulés en durée *S_{PWN}* à la grille 150 du transistor NMOS 15, signaux dont le rapport cyclique est fonction de l'amplitude de la différence mesurée entre la consigne *V_{Ref}* et la tension de batterie *V_{Bat}*. On a représenté schématiquement sur la figure 1A trois séries de signaux de commande *S_{PWM}* correspondant à des rapports cycliques égaux à 10 %, 50 % et 90 %, respectivement. En d'autres termes, le transistor NMOS 15 ne conduit que 10, 50 et 90 % du temps pour les valeurs de rapports cycliques précités, et, de façon plus générale, *X* % du temps pour une valeur quelconque *X* du rapport cyclique.

On va se reporter de nouveau à la figure 1. Utilisé en tant que démarreur, c'est l'alternateur-démarreur 10 qui entraîne en rotation le moteur thermique *Mth*, *a priori* par l'intermédiaire du même système d'entraînement courroie-poulies *SCP* ou similaire. L'alternateur-démarreur 10 fonctionne alors en mode moteur. Il est donc nécessaire d'alimenter en courant les enroulements de stator, 1001-1003, qui jouent du fait de l'inversion, le rôle d'inducteurs, l'enroulement de rotor 101 jouant le rôle d'induit. De même, le fonctionnement du convertisseur alternatif-continu 21 est inversé. Il est alimenté en énergie électrique par le super-condensateur SC. Cet inversion est déclenché par l'unité de contrôle électronique 14 qui transmet sur une sortie de commande 142 un premier signal de commande inversant le fonctionnement du convertisseur alternatif-continu 11 et une suite de signaux de commande d'ouverture des transistors MOSFET (non représentés) de ce convertisseur 11 qui délivre les courants polyphasés nécessaires à l'alimentation appropriée des enroulements, 1001 à 1003, du stator 100. Ce mode de fonctionnement est bien connu de l'Homme de métier. Pour une description plus détaillée, on pourra se reporter de nouveau avec profit à la demande de brevet FR 2 745 445 précitée. Les signaux de commande sont transmis sur une entrée 111 du convertisseur alternatif-continu 11. Bien que les sortie 142 et entrée 111 aient été supposées uniques, il va de soi qu'elles peuvent être multiples et reliées par un bus multifilaire.

L'architecture de circuits de génération d'énergie électrique et de circuits de commande de démarrage d'un moteur thermique qui vient d'être décrite semble satisfaire élégamment un grand nombre de besoin qui se posent pour l'application envisagée. Cependant, elle n'est pas exempte pour autant d'inconvénients sérieux, voire rédhibitoires dans certaines configurations de moteurs thermiques, comme il va maintenant l'être montré.

En particulier, comme il a été rappelé, dans ce type d'architecture, utilisant un super-condensateur, il est nécessaire de prévoir un système de pré-charge de ces moyens de stockage d'énergie auxiliaires.

Dans l'Art Connu, il est d'usage d'utiliser un convertisseur continu-continu à cette fin, qui, comme il a été rappelé, puise l'énergie nécessaire dans la batterie *Bat*, ce qui ne constitue pas une solution optimisée, ni même simplement appropriée pour de nombreuses applications.

Des problèmes se posent avec acuité particulière lorsqu'il s'agit de faire démarrer des gros moteurs thermiques, par exemple des moteurs pour des véhicules du type dit "4x4", et lorsqu'il est nécessaire d'atteindre très rapidement la valeur maximale de la tension "14 + X" volts précitée.

Des besoins spécifiques se font donc sentir pour disposer d'un dispositif de pré-charge optimisé du super-condensateur.

On doit tout d'abord écarter une solution qui consisterait à connecter le super-condensateur directement à la batterie pour le charger lors de la période précédant le démarrage du moteur. Certes, la charge serait très rapide, puisqu'une batterie présente une résistance interne très faible, mais le courant nécessaire serait corrélativement beaucoup trop important. Ce mode de fonctionnement endommagerait la batterie.

On pourrait songer à limiter l'amplitude de courant de pointe en disposant une résistance en série entre la batterie et le super-condensateur. Cette solution n'est cependant pas non plus envisageable car, dans cette hypothèse, le temps de pré-charge serait trop long.

Enfin, un convertisseur continu-continu, même s'il existe généralement dans le type d'architecture qui vient d'être décrite, n'est pas dimensionné en puissance, ni même apte à remplir cette tâche spécifique. En effet, même s'il est réversible, sa structure électronique ne lui permet pas de fonctionner avec une tension sur le réseau "+X" inférieure à celle du réseau de batterie, par exemple +12 V. En conséquence, il devient nécessaire de lui adjoindre des circuits complémentaires pour pré-charger le super-condensateur entre 0 V et la tension nominale de batterie, soit +12 V dans l'exemple décrit. Cette caractéristique entraîne un surcroît de complexité et de coût.

En outre, du fait de la puissance électrique relativement limitée propre au convertisseur continu-continu, le temps de pré-charge est long, typiquement de plusieurs dizaines de secondes. En conséquence, cette solution ne peut donc pas être non plus retenue pour de nombreuses applications.

L'invention a pour objet de fournir un système d'alimentation électrique de circuits électriques tel que défini dans la revendication 1 ci-annexée, système visant à pallier les inconvénients des dispositifs de l'art connu, et dont certains viennent d'être rappelés.

L'invention vise aussi à remplir des besoins qui se font sentir et qui n'ont qu'imparfaitement été remplis jusqu'à présent dans l'Art Connu.

Selon une caractéristique de l'invention, le super-condensateur est pré-chargé en utilisant l'alternateur-démarreur, l'enroulement de rotor étant alimenté à partir de la tension "14+X", de façon plus générale "*V_{Bat}* + X", c'est-à-dire de la tension aux bornes du super-condensateur. Cette alimentation est réalisée en continu et non plus, comme dans l'Art Connu, par des impulsions modulées en durée ("PWM"), au moins pendant une période dite de pré-charge.

Pour ce faire, on utilise le champ magnétique rémanent présent dans le rotor de la machine électrique tournante et augmenté avantageusement par des aimants permanents. Cette caractéristique permet de récupérer des tensions aux bornes du stator sans courant excitation initial de la machine.

Le faible courant généré en tout début de cycle de démarrage alimente non seulement le super-condensateur, mais aussi l'enroulement d'excitation de rotor, puisque celui-ci est directement alimenté par la tension aux bornes du super-condensateur. On observe alors un effet cumulatif. En effet, la tension aux bornes du super-condensateur augmentant, le courant d'excitation augmente aussi, ce qui à pour effet une augmentation corrélative des tensions générées par les enroulements de stator de l'alternateur-démarreur, ce qui a à son tour pour effet d'augmenter le courant d'excitation de l'enroulement de rotor et ainsi de suite. Il s'agit d'une rétroaction à coefficient positif qui se traduit par un "emballement" du système. La tension de pré-charge du super-condensateur et la puissance développée par l'alternateur-démarreur augmentent très rapidement, de façon quasi-exponentielle, pour atteindre typiquement plusieurs kilowatts dans les machines couramment utilisés.

Le dispositif selon l'invention présente de nombreux avantages.

Tout d'abord, le dispositif selon l'invention permet de conserver l'essentiel de l'architecture des dispositifs de l'Art Connu, et ne met en oeuvre que des technologies couramment disponibles.

Elle n'implique pas un surcroît de complexité, ni de coût.

Le seul composant supplémentaire nécessaire par rapport à un système alternateur-démarreur est un démarreur auxiliaire de type classique alimenté par la tension de batterie. On doit cependant remarquer que, d'une part, un démarreur de ce type, dont la technologie est bien maîtrisée depuis longtemps, n'est pas très coûteux, et, d'autre part, que ce composant est souvent présent sur un véhicule, en sus de l'alternateur-démarreur, notamment pour les gros moteurs (par exemple pour un véhicule du type 4x4 précité). En effet, en particulier pour ce type d'applications, le fonctionnement de l'alternateur-démarreur n'est pas optimisé lors des démarrages à froid, conditions dans lesquelles, *a priori*, le super-condensateur est entièrement déchargé et qui nécessitent précisément une pré-charge rapide.

L'invention va maintenant être décrite de façon plus détaillée en se référant aux dessins annexés, parmi lesquels :
- la figure 1 illustre schématiquement un exemple de réalisation d'une architecture dite de "*système 14+X à super-condensateur de structure série*" comprenant un alternateur-démarreur selon l'Art Connu ;
- la figure 1A illustre un circuit particulier de cette architecture destiné à l'alimentation en courant d'excitation d'un enroulement de rotor du alternateur-démarreur de la figure 1 ;
- la figure 2 illustre schématiquement un exemple de réalisation d'une architecture dite de "*système 14+X à super-condensateur de structure série*" comprenant un alternateur-démarreur selon un mode de réalisation particulier de l'invention ; et
- la figure 3 est un graphique sur lequel figure un jeu de courbes illustrant le fonctionnement du dispositif de la figure 2.

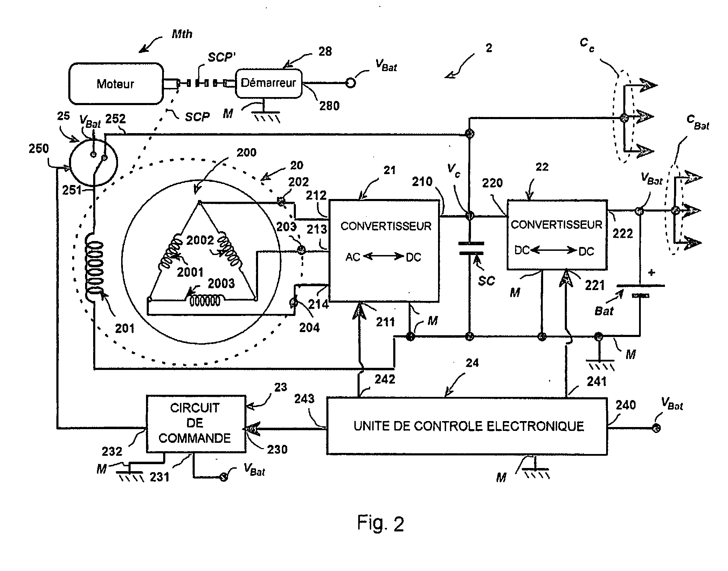

On va maintenant décrire un exemple d'architecture dite de "*système 14+X à super-condensateur de structure série*" comprenant un alternateur-démarreur selon un mode de réalisation particulier de l'invention par référence à la figure 2.

Sur la figure 2, cette architecture est désormais référencée 2. Cependant, comme il a déjà été signalé, pour l'essentiel, cette architecture reprend celle de l'Art Connu illustrée par la figure 1, ce qui constitue un des avantages de l'invention. Aussi, les références attribuées aux éléments communs aux deux architectures, et jouant un rôle sinon identique mais pour le moins similaire, ne diffèrent que par les premiers chiffres, "1" et "2", respectivement. Aussi, ces éléments ne seront re-décrits qu'en tant que de besoin. Seules les caractéristiques spécifiques au système propre à l'invention seront décrits de façon détaillée.

Dans l'exemple de réalisation décrit sur la figure 2, le système 2 est donc constitué, comme précédemment, par une structure série comprenant un alternateur-démarreur 20, un convertisseur alternatif-continu 21, un super-condensateur *SC*, un convertisseur continu-continu 22 et une batterie *Bat.* Comme précédemment également, les fonctionnements du convertisseur alternatif-continu 21 et du convertisseur continu-continu 22 sont sous la commande d'une unité de contrôle électronique 24, avantageusement constituée par un calculateur numérique à programme enregistré.

On retrouve également deux réseaux de distribution de tension : le réseau de batterie *C_{bat}* distribuant une tension *V_{bat}*, quasiment stable, par exemple +12V, et le réseau *C_{c}* distribuant une tension non régulée, la tension *V_{c}* aux bornes du super-condensateur *SC* (typiquement +(14+X) Volts, avec X variable). Le convertisseur continu-continu 22 alimente la batterie *Bat* par une tension de charge régulée *V_{Bat},* typiquement de +14 *V*, étant lui-même alimenté en entrée par la tension *V_{c}* aux bornes du super-condensateur *SC*.

Toujours de façon similaire à l'Art Connu (système de la figure 1 par exemple), en mode générateur, l'alternateur-démarreur 20 est entraîné par le moteur thermique *Mth* du véhicule (non représenté) via un système de courroie *SCP* ou similaire, et alimente en courant alternatif le convertisseur alternatif-continu 21, en l'occurrence triphasé, le stator 200 comprenant trois enroulements, 2001 à 2003 à configuration triangle. Ce dernier fournit au super-condensateur SC la tension +(14+X) Volts précitée.

En mode moteur, c'est le super-condensateur *SC* qui alimente le convertisseur alternatif-continu 21, que l'on a supposé réversible, qui alimente les enroulements, 2001 à 2003, du stator 200. L'alternateur-démarreur 20 entraîne alors le moteur thermique *Mth, a priori* via le même système de courroie *SCP* pour le faire démarrer ou pour fournir un couple mécanique additionnel par exemple dans les systèmes dits micro-hybrides.

L'alternateur-démarreur 20 comprend un enroulement de rotor 201, qui dans ce mode est alimenté par un courant d'excitation fourni par un commutateur électronique 25 sous la commande d'un circuit de commande 23.

Selon une première différence par rapport à l'architecture du système de la figure 1, constituant une des caractéristiques importantes de l'invention, le commutateur électronique 25 est connecté désormais pendant la période de pré-charge à la borne positive du super-condensateur *SC* et non plus à la borne positive de la batterie (tension *V_{bat}*) l'autre extrémité de l'enroulement de rotor 201 restant connecté au circuit de masse *M*. En d'autres termes, le circuit série "commutateur 25-enroulemnt 201" est alimenté par la tension *V_{c}* qui se développe aux bornes du super-condensateur *SC*. En outre, pendant la période dite de pré-charge, la commande en PWM est de préférence bloquée de manière à alimenter l'enroulement d'excitation selon un mode continu ou pleine onde.

Selon une autre caractéristique de l'invention, on prévoit un démarreur auxiliaire de type classique 28, alimenté également de façon classique par la batterie *Bat*, entre la borne 280 (+*V_{Bat}*) et la ligne de masse *M*.

Lorsqu'on démarre "à froid", le super-condensateur *SC* est, *a priori*, entièrement déchargé : *V_{c}* = 0.

Même si le convertisseur alternatif-continu 21 est réversible, comme il a été supposé, il ne peut fournir dans cette hypothèse, aucune énergie électrique à l'alternateur-démarreur 20. Ce dernier ne pourrait pas donc fonctionner en mode démarreur.

Selon l'invention, c'est le démarreur auxiliaire 28 qui initie la phase de démarrage. Il entraîne le moteur thermique *Mth* en rotation en tout début de cette phase par l'intermédiaire d'un deuxième système courroie-poulie *SCP*' ou tout organe similaire.

De façon usuelle, l'enroulement de rotor 201 est bobiné sur un noyau de forme appropriée en matériau magnétique (non représenté). De façon avantageuse, le rotor peut également comprendre un ou plusieurs aimants permanents, comme par exemple dans le cas des machines électriques tournantes hybrides. Ces dispositions bien connues de l'Homme de Métier. Il est donc inutile de les décrire plus avant.

Lorsque le démarreur auxiliaire 28 entraîne en rotation le moteur thermique *Mth*, il entraîne également en rotation le rotor de l'alternateur-démarreur 20 par l'intermédiaire du premier système courroie-poulie *SCP*. Comme il est bien connu également, le noyau magnétique du rotor présente un champ magnétique rémanent. En outre, si des aimants permanents sont présents, ce champ rémanent en est plus important.

II s'ensuit que cette caractéristique permet à l'alternateur-démarreur 20 de générer en sortie (bornes 201 à 203) des courants alternatifs triphasés (dans l'exemple décrit, polyphasés dans le cas général), certes faibles mais non nuls, lorsque le rotor est entraîné en rotation.

On suppose que l'unité de contrôle électronique 24 envoie un signal de commande approprié sur l'entrée 230 du circuit de commande 23, de façon à ce que celui-ci envoie à son tour un signal de commande (sortie 232) au commutateur électronique 25, sur son entrée de commande 250. Ce signal de commande occasionne un basculement du commutateur 25, c'est-à-dire la fermeture du circuit électrique entre les bornes opposées 251 et 252. Le commutateur 25 connecte l'enroulement de rotor 201 entre les bornes du super-condensateur *SC*, c'est-à-dire applique à l'enroulement 201 la tension *V_{c}*.

En tout début de cycle, le courant généré par l'alternateur-démarreur 20 est naturellement très faible. Cependant, puisque ce dernier alimente, non seulement le super-condensateur *SC*, mais aussi l'enroulement 201 d'excitation de rotor, on observe alors un effet cumulatif. En effet, la tension aux bornes du super-condensateur *SC* augmentant, le courant d'excitation de l'enroulement de rotor 201 augmente également, ce qui à pour effet une augmentation corrélative du courant généré par l'alternateur-démarreur 20, ce qui a à son tour pour effet d'augmenter le courant d'excitation de l'enroulement de rotor 201, et ainsi de suite. II s'agit d'une rétroaction à coefficient positif qui se traduit par un "emballement" du système. La tension de pré-charge du super-condensateur *SC* augmente très rapidement. II en est de même de la puissance développée par l'alternateur-démarreur 20 qui atteint typiquement plusieurs kilowatts, dans les machines couramment utilisés, en un lapse de temps très court.

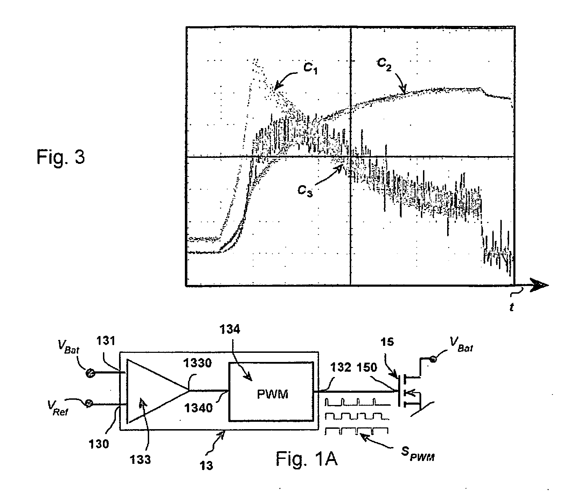

La figure 3 permet d'illustrer le fonctionnement du dispositif de pré-charge du super-condensateur selon l'invention. Sur la figure 3 on a représenté trois courbes, *C*₁ à *C*₃ montrant l'évolution dans le temps du courant, de la tension et de la puissance disponible aux bornes du super-condensateur.

Pour fixer les idées, on a supposé, dans l'exemple illustré par la figure 3, que le super-condensateur *SC* présentait une valeur de capacitance de 150 Farads et que le démarreur auxiliaire 28 entraîne le moteur thermique *Mth* à 1800 t/mn.

La courbe *C*₁ illustre schématiquement l'allure typique de la variation du courant débité par l'alternateur-démarreur 20 en fonction du temps. Dans l'exemple décrit, chaque division de l'axe vertical représente typiquement 50 A. On constate une croissance très rapide du courant suivi d'une décroissance plus lente. Le pic de courant est atteint au bout de quelques secondes.

La courbe *C*₂ illustre typiquement l'allure typique de la variation de la tension *V_{c}* aux bornes du super-condensateur *SC*. Dans l'exemple décrit, on constate que la tension atteint typiquement 10 V en 4 s, 16 V en 8 s et 20 V en 12 s.

Enfin, la courbe *C*₃ illustre l'allure de la variation de la puissance délivrée par l'alternateur-démarreur 20. Toujours dans l'exemple décrit, chaque division de l'axe vertical représente 1 kW. La puissance croît très rapidement. Le maximum est atteint très vite, peu après le pic de courant débité (courbe *C*₁). La puissance décroît ensuite comme la courbe du courant (*C*₁).

On constate donc que les dispositions, propres à l'invention permettent de pré-charger très rapidement le super-condensateur *SC*, sans devoir avoir recours, ni au convertisseur continu-continu 22, qui, même s'il est réversible, n'autorise pas une charge rapide, ni à des circuits auxiliaires complexes et coûteux qui permettraient de suppléer au manque de puissance inhérent au convertisseur continu-continu 22.

Avantageusement, dans un autre mode de réalisation particulier de l'invention, on fait appel pour le convertisseur alternatif-continu réversible 11 à des circuits de commutation présentant de faibles pertes à la saturation. De tels composants sont connus, notamment sous la dénomination "super diode", et sont utilisés dans les techniques de redressement synchrone. Cette caractéristique présente l'avantage de commencer à récupérer un courant de pré-charge du super-condensateur à partir de tensions statoriques plus faibles.

Pour fixer les idées, à titre d'exemples non limitatifs, les brevets américains US 2004/0125627 (Nadd et al.) ou US 6 212 084 (Turner) décrivent plusieurs variantes de dispositifs mettant en oeuvre ces composants dits « super-diode » basés sur l'utilisation d'un transistor de puissance MOSEFT.

On constate aisément à la lecture de ce qui précède que l'invention atteint bien les buts qu'elle s'est fixés. Elle permet d'obtenir une pré-charge très rapide du super-condensateur *SC* à l'aide de l'alternateur-démarreur 20.

La seule contrainte est la nécessité de disposer d'un démarreur auxiliaire classique. Outre que la technologie de tels composants est bien maîtrisée depuis de nombreuses années et qu'ils sont peut onéreux, il a été signalé qu'ils étaient généralement présents, voire nécessaires, dans beaucoup de véhicules, notamment ceux disposant d'un moteur puissant, ce même si l'alternateur utilisé est du type alternateur-démarreur.

Par contre, le dispositif selon l'invention reste tout à fait compatible avec les technologies mis en oeuvre dans l'Art Connu et l'architecture générale du système complet ne nécessite que des adaptations mineures concernant les circuits de commande et de commutation.

En d'autres termes, le dispositif selon l'invention n'implique ni surcoût ni augmentation de complexité significatifs.

L'invention présente de nombreux avantages qui ont été indiqués dans la présente description, et il est inutile de les rappeler.

II doit être clair cependant que l'invention n'est pas limitée aux seuls exemples de réalisations explicitement décrits, notamment en relation avec les figures 2 à 3.

Puisque, selon un aspect avantageux de l'invention, il n'est plus nécessaire de recourir au convertisseur continu-continu pour pré-charger le super-condensateur, il n'est plus obligatoire non plus que ce convertisseur soit de type réversible.

Enfin, les valeurs numériques n'ont été donnés que pour mieux illustrer les caractéristiques principales de l'invention et ne procède que d'un choix technologique à la portée de l'Homme de Métier. Elles dépendent notamment du type de moteur monté sur le véhicule, et plus particulièrement de sa puissance, de façon générale de l'application précise envisagée.

## Revendications

1. Système d'alimentation en énergie électrique de circuits électriques d'un véhicule automobile comprenant un moteur thermique, ledit système comprenant une machine électrique tournante configurée pour être couplée audit moteur thermique, un convertisseur alternatif-continu de type réversible, lesdits moyens de stockage d'énergie électrique auxiliaires, un convertisseur continu-continu et des moyens de stockage d'énergie électrique dits principaux, ladite machine électrique tournante étant entraînée par ledit moteur thermique en mode dit générateur de courant électrique de manière à produire une énergie électrique fournie audit système et étant alimentée en énergie électrique en mode dit moteur de manière à fournir un couple mécanique au moteur thermique, ladite machine électrique tournante comprenant au moins un enroulement de stator connecté audit convertisseur alternatif-continu et un enroulement de rotor prévu pour être alimenté par un courant dit d'excitation via un commutateur sous le contrôle d'un circuit de commande, **caractérisé en ce qu'**il comprend, en outre, un démarreur auxiliaire et **en ce que** ledit système est configuré de façon à ce que, pendant au moins une période dite de pré-charge desdits moyens de stockage d'énergie électrique auxiliaires (SC), ladite machine électrique tournante (20) étant entraînée en rotation par le démarreur auxiliaire, ledit commutateur (250) connecte ledit enroulement de rotor (201) auxdits moyens de stockage d'énergie électrique auxiliaires (SC) de manière à fournir un courant d'excitation audit enroulement de rotor (201), ledit courant d'excitation s'initiant du fait d'un champ magnétique rémanent dudit rotor et augmentant de manière cumulative par un effet de rétroaction positive, de manière à pré-charger lesdits moyens de stockage d'énergie électrique auxiliaires (*SC*) à une valeur prédéterminée de tension.

2. Système selon la revendication 1, **caractérisé en ce que** ledit rotor comprend au moins un aimant permanent qui augmente ledit champ magnétique rémanent.

3. Système selon la revendication 1, **caractérisé en ce que** lesdits moyens de stockage d'énergie électrique auxiliaires sont constitués par un composant capacitif du type dit super-condensateur (*SC*).

4. Système selon la revendication 1, **caractérisé en ce que** lesdits moyens de stockage d'énergie électrique principaux sont constitués par une batterie électrique rechargeable (*Bat*) développant à ses bornes une tension sensiblement stable *V_{bat}*, d'amplitude déterminée, et **en ce que** ladite tension prédéterminée régnant aux bornes desdits moyens de stockage d'énergie électrique auxiliaires (*SC*) est une tension dite flottante, d'amplitude supérieure à ladite tension *V_{bat}* et égale à *V_{bat}* + X, avec X variable.

5. Système selon la revendication 1, **caractérisé en ce que** ledit commutateur est un commutateur électronique (25).

6. Système selon la revendication 5, **caractérisé en ce que** le commutateur électronique comprend au moins un transistor N-MOS.

7. Système selon la revendication 1, **caractérisé en ce que** ladite machine électrique tournante (20) est du type polyphasé, **en ce que** son stator (200) comprend plusieurs enroulements (2001-2003) délivrant un courant polyphasé audit convertisseur alternatif-continu (21) dans ledit mode générateur et **en ce que** lesdits enroulements (2001-2003) sont alimentés en courant polyphasé par ledit convertisseur alternatif-continu (21) dans ledit mode moteur.

8. Système selon la revendication 6, **caractérisé en ce que** ladite machine électrique tournante (20) est du type triphasé et **en ce que** son stator comprend trois enroulements (2001-2003) connectés en configuration triangle.

9. Système selon l'une quelconque des revendication 1, **caractérisé en ce que** ledit convertisseur continu-continu (22) est du type réversible.

10. Système selon l'une quelconque des revendications précédentes, **caractérisé en ce qu'**il est prévu une unité de contrôle électronique (24), alimentée (*V_{Bat}*) par lesdits moyens de stockage d'énergie électrique principaux (*Bat*), pour la commande du fonctionnement desdits circuit de commande (23), ledit convertisseur alternatif-continu (21) et ledit convertisseur continu-continu (22).

11. Système selon la revendication 10, **caractérisé en ce que** ladite unité de contrôle électronique (24) est un calculateur numérique à programme enregistré.

## Patentansprüche

1. System für die Versorgung mit elektrischer Energie von elektrischen Schaltungen eines Kraftfahrzeugs, das eine Brennkraftmaschine enthält, wobei das System eine rotierende elektrische Maschine, die konfiguriert ist, mit der Brennkraftmaschine gekoppelt zu sein, einen Wechselstrom/Gleichstrom-Umsetzer des reversiblen Typs, sekundäre Mittel zum Speichern elektrischer Energie, einen Gleichstrom/Gleichstrom-Umsetzer und primäre Mittel zum Speichern elektrischer Energie umfasst, wobei die rotierende elektrische Maschine im Generatormodus für elektrischen Strom durch die Brennkraftmaschine angetrieben wird, derart, dass elektrische Energie erzeugt wird, die an das System geliefert wird, und im Motormodus mit elektrischer Energie versorgt wird, derart, dass ein mechanisches Drehmoment an die Brennkraftmaschine geliefert wird, wobei die rotierende elektrische Maschine wenigstens eine Statorwicklung, die mit dem Wechselstrom/Gleichstrom-Umsetzer verbunden ist, und eine Rotorwicklung, die dazu vorgesehen ist, durch einen Erregungsstrom über einen Kommutator unter der Steuerung einer Steuerschaltung versorgt zu werden, umfasst, **dadurch gekennzeichnet, dass** sie außerdem einen Hilfsanlasser umfasst und dass das System in der Weise konfiguriert ist, dass wenigstens während einer Vorladeperiode der sekundären Mittel (SC) zum Speichern elektrischer Energie, in der die rotierende elektrische Maschine (20) durch den Hilfsanlasser rotatorisch angetrieben wird, der Kommutator (250) die Rotorwicklung (201) mit den sekundären Mitteln (SC) zum Speichern elektrischer Energie verbindet, derart, dass ein Erregungsstrom an die Rotorwicklung (201) geliefert wird, wobei der Erregungsstrom aufgrund eines remanenten Magnetfelds des Rotors entsteht und durch eine positive Rückwirkung kumulativ zunimmt, derart, dass die sekundären Mittel (SC) zum Speichern elektrischer Energie auf einen vorgegebenen Spannungswert vorgeladen werden.

2. System nach Anspruch 1, **dadurch gekennzeichnet, dass** der Rotor wenigstens einen Permanentmagneten umfasst, der das remanente Magnetfeld erhöht.

3. System nach Anspruch 1, **dadurch gekennzeichnet, dass** die sekundären Mittel zum Speichern elektrischer Energie durch eine kapazitive Komponente des Typs Superkondensator (SC) gebildet sind.

4. System nach Anspruch 1, **dadurch gekennzeichnet, dass** die primären Mittel zum Speichern elektrischer Energie durch eine wiederaufladbare elektrische Batterie (Bat) gebildet sind, die an ihren Anschlüssen eine im Wesentlichen stabile Spannung V*_{bat}* mit bestimmter Amplitude aufbaut, und dass die vorgegebene Spannung, die an den Anschlüssen der sekundären Mittel (SC) zum Speichern elektrischer Energie herrscht, eine schwebende Spannung ist, deren Amplitude größer als jene der Spannung V*_{bat}* ist und gleich V*_{bat}* + X ist, wobei X variabel ist.

5. System nach Anspruch 1, **dadurch gekennzeichnet, dass** der Kommutator ein elektronischer Kommutator (25) ist.

6. System nach Anspruch 5, **dadurch gekennzeichnet, dass** der elektronische Kommutator wenigstens einen NMOS-Transistor umfasst.

7. System nach Anspruch 1, **dadurch gekennzeichnet, dass** die rotierende elektrische Maschine (20) vom mehrphasigen Typ ist, dass ihr Stator (200) mehrere Wicklungen (2001-2003) umfasst, die im Generatormodus einen mehrphasigen Strom an den Wechselstrom/Gleichstrom-Umsetzer (21) liefern und dass die Wicklungen (2001-2003) im Motormodus durch den Wechselstrom/Gleichstrom-Umsetzer (21) mit einem mehrphasigen Strom versorgt werden.

8. System nach Anspruch 6, **dadurch gekennzeichnet, dass** die rotierende elektrische Maschine (20) vom dreiphasigen Typ ist und dass ihr Stator drei Wicklungen (2001-2003) umfasst, die in einer Dreieckskonfiguration verbunden sind.

9. System nach einem der Anspruch 1, **dadurch gekennzeichnet, dass** der Gleichstrom/GleichstromUmsetzer (22) vom reversiblen Typ ist.

10. System nach einem der vorhergehenden Ansprüche, **dadurch gekennzeichnet, dass** es mit einer elektronischen Steuereinheit (24) versehen ist, die von den primären Mitteln (Bat) zum Speichern elektrischer Energie versorgt wird (V*_{bat}*), um die Funktion der Steuerschaltung (23), des Wechselstrom/Gleichstrom-Umsetzers (21) und des Gleichstrom/Gleichstrom-Umsetzers (22) zu steuern.

11. System nach Anspruch 10, **dadurch gekennzeichnet, dass** die elektronische Steuereinheit (24) ein digitaler Rechner mit aufgezeichnetem Programm ist.

## Claims

1. Electrical energy supply system for electrical circuits of a motor vehicle comprising a heat engine, said system comprising a rotating electrical machine configured to be coupled to said heat engine, an AC-DC converter of reversible type, said auxiliary electrical energy storage means, a DC-DC converter and so-called main electrical energy storage means, said rotating electrical machine being driven by said heat engine in a so-called electric current generator mode so as to produce an electrical energy supplied to said system and being supplied with electrical energy in a so-called motor mode so as to supply a mechanical torque to the heat engine, said rotating electrical machine comprising at least one stator winding connected to said AC-DC converter and one rotor winding designed to be supplied by a so-called excitation current via a switch under the control of a control circuit, **characterized in that** it also comprises an auxiliary starter and **in that** said system is configured in such a way that, during at least one so-called precharging period of said auxiliary electrical energy storage means (SC), said rotating electrical machine (20) being driven in rotation by the auxiliary starter, said switch (250) connects said rotor winding (201) to said auxiliary electrical energy storage means (SC) so as to supply an excitation current to said rotor winding (201), said excitation current being initiated due to a remnant magnetic field of said rotor and increasing cumulatively through a positive feedback effect, so as to precharge said auxiliary electrical energy storage means (SC) to a predetermined voltage value.

2. System according to Claim 1, **characterized in that** said rotor comprises at least one permanent magnet which increases said remnant magnetic field.

3. System according to Claim 1, **characterized in that** said auxiliary electrical energy storage means consist of a capacitive component of the so-called supercapacitor (SC) type.

4. System according to Claim 1, **characterized in that** said main electrical energy storage means consist of a rechargeable electrical battery (*Bat*) developing, at its terminals, a substantially stable voltage *V_{bat}*, of determined amplitude and **in that** said predetermined voltage prevailing at the terminals of said auxiliary electrical energy storage means (SC) is a so-called floating voltage, of amplitude greater than said voltage *V_{bat}* and equal to *V_{bat}* + X, with X being variable.

5. System according to Claim 1, **characterized in that** said switch is an electronic switch (25).

6. System according to Claim 5, **characterized in that** the electronic switch comprises at least one N-MOS transistor.

7. System according to Claim 1, **characterized in that** said rotating electrical machine (20) is of the polyphase type, **in that** its stator (200) comprises a plurality of windings (2001-2003) delivering a polyphase current to said AC-DC converter (21) in said generator mode and **in that** said windings (2001-2003) are supplied with polyphase current by said AC-DC converter (21) in said motor mode.

8. System according to Claim 6, **characterized in that** said rotating electrical machine (20) is of the three-phase type and **in that** its stator comprises three windings (2001-2003) connected in delta configuration.

9. System according to any one of Claim 1, **characterized in that** said DC-DC converter (22) is of reversible type.

10. System according to any one of the preceding claims, **characterized in that** an electronic control unit (24) is provided, supplied (*V_{bat}*) by said main electrical energy storage means (*Bat*) to control the operation of said control circuits (23), said AC-DC converter (21) and said DC-DC converter (22).

11. System according to Claim 10, **characterized in that** said electronic control unit (24) is a digital computer with stored program.
